(19) **Europäisches Patentamt / European Patent Office / Office européen des brevets**

(11) **EP 4 593 311 A1**

(12) # EUROPEAN PATENT APPLICATION
published in accordance with Art. 153(4) EPC

(43) Date of publication:
30.07.2025 Bulletin 2025/31

(21) Application number: 23893670.2

(22) Date of filing: 13.11.2023

(51) International Patent Classification (IPC):
*H04J 3/16* (2006.01)

(52) Cooperative Patent Classification (CPC):
H04J 3/16

(86) International application number:
PCT/CN2023/131310

(87) International publication number:
WO 2024/109580 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2022 CN 202211469527

(71) Applicant: Huawei Technologies Co., Ltd.
Shenzhen, Guangdong 518129 (CN)

(72) Inventors:
• SUN, Liang
  Shenzhen, Guangdong 518129 (CN)
• YU, Liang
  Shenzhen, Guangdong 518129 (CN)
• ZHENG, Shuqian
  Shenzhen, Guangdong 518129 (CN)

(74) Representative: Huawei European IPR
Huawei Technologies Duesseldorf GmbH
Riesstraße 25
80992 München (DE)

(54) **DATA TRANSMISSION METHOD AND APPARATUS**

(57) Embodiments of this application provide a data transmission method and apparatus. The method includes: A transmitter device obtains service data; maps the service data to a data frame; and sends the data frame to a receiver device. The data frame includes an overhead area and a payload area, the overhead area includes a first indication field and a second indication field, the first indication field indicates a status of a first timeslot in the payload area, and the second indication field indicates an association relationship between the first timeslot and the service data. According to the method disclosed in this application, an overhead design can be simplified, a correspondence between a service and a timeslot can be effectively transmitted, and system transmission performance can be further improved.

FIG. 4

# Description

This application claims priority to Chinese Patent Application No. 202211469527.X, filed with the China National Intellectual Property Administration on November 22, 2022 and entitled "DATA TRANSMISSION METHOD AND APPARATUS", which is incorporated herein by reference in its entirety.

## TECHNICAL FIELD

This application relates to the field of optical communication, and more specifically, to a data transmission method and apparatus.

## BACKGROUND

An optical service unit (optical service unit, OSU), as a high-quality private line bearer applicable to different bandwidth levels, has a metropolitan area network-oriented and efficient transport pipe with a flexible bandwidth using an optical transport network (optical transport network, OTN) as basis, and can implement efficient transport for services at a granularity of 10 Mbit/s to 1 Gbit/s.

However, as there are increasing requirements for carrying a private line service, how to consider overheads during normal transmission and bandwidth adjustment, and improve system transmission performance is an urgent problem to be resolved.

## SUMMARY

Embodiments of this application provide a data transmission method and apparatus, to simplify an overhead design, and improve system transmission performance.

According to a first aspect, a data transmission method is provided. The method may be performed by a transmitter device or a component (such as a chip or a chip system) of the transmitter device. This is not limited in this application. The method includes: obtaining service data; mapping the service data to a data frame; and sending the data frame to a receiver device. The data frame includes an overhead area and a payload area, the overhead area includes a first indication field and a second indication field, the first indication field indicates a status of a first timeslot in the payload area, and the second indication field indicates an association relationship between the first timeslot and the service data.

Based on the foregoing solution, the first indication field and the second indication field are defined in the overhead area of the data frame, and both the status of the first timeslot and the association relationship between the first timeslot and the service data are indicated, so that overheads can be reduced, transmission performance can be improved, and in different application scenarios, especially in scenarios of normal transmission and bandwidth adjustment, effective transmission of a correspondence between a service and a timeslot can be ensured.

With reference to the first aspect, in some implementations of the first aspect, the association relationship between the first timeslot and the service data includes: If the first timeslot is in an idle state, it indicates that the first timeslot does not carry the service data; the first timeslot is occupied by the service data; the first timeslot is configured to be added, to carry the service data; or the first timeslot is configured to be removed, not to carry the service data.

With reference to the first aspect, in some implementations of the first aspect, the first indication field is located in row 4 and column 15 of the overhead area of the data frame, and the second indication field is located in row 4 and columns 15 and 16 of the overhead area of the data frame.

With reference to the first aspect, in some implementations of the first aspect, the first timeslot is 16 bytes, the first indication field is two bits, and the second indication field is 10 bits.

With reference to the first aspect, in some implementations of the first aspect, the overhead area further includes a first optical payload unit multiframe indication, a second optical payload unit multiframe indication, and a multiframe alignment signal, and the first timeslot satisfies: $TS=A*119+B*6+C$. TS is the first timeslot, A is the first optical payload unit multiframe indication, B is the second optical payload unit multiframe indication, C is the multiframe alignment signal, B is an integer greater than or equal to 0 and less than or equal to 19, and C is an integer greater than or equal to 1 and less than or equal to 6.

With reference to the first aspect, in some implementations of the first aspect, the first optical payload unit multiframe indication is three bits, the second optical payload unit multiframe indication is five bits, and the multiframe alignment signal is three bits.

With reference to the first aspect, in some implementations of the first aspect, when the data frame includes an optical payload unit 0 frame, a value of A is 0, the payload area includes N periods, each period includes timeslots 1 to 119, and the first optical payload unit multiframe indication indicates timeslots 1 to 119 in a $1^{st}$ period in row 4 of the payload area of the data frame.

With reference to the first aspect, in some implementations of the first aspect, when the data frame includes an optical payload unit 0 frame at a double rate, a value of A is 0 or 1, the payload area includes N periods, and each period includes timeslots 1 to 238. When the value of A is 0, the first optical payload unit multiframe indication indicates timeslots 1 to 119 in row 4 of the payload area of the data frame; when the value of A is 1, the first optical payload unit multiframe indication indicates timeslots 120 to 238 in row 4 of the payload area of the data frame.

Based on the foregoing solution, it may be determined, by using the first optical payload unit multiframe indication, whether an association relationship between a service and a timeslot that is carried in a current data frame corresponds to timeslots 1 to 119 or timeslots 120 to 238.

With reference to the first aspect, in some implementations of the first aspect, the data frame is an optical transport network OTN frame.

According to a second aspect, a data transmission method is provided. The method may be performed by a receiver device or a component (such as a chip or a chip system) of the receiver device. This is not limited in this application. The method includes: receiving a data frame; and demapping service data from the data frame based on a first indication field and a second indication field.

Based on the foregoing solution, the first indication field and the second indication field are defined in an overhead area of the data frame, and both a status of a first timeslot and an association relationship between the first timeslot and the service data are indicated, so that overheads can be reduced, transmission performance can be improved, and in different application scenarios, especially in scenarios of normal transmission and bandwidth adjustment, effective transmission of a correspondence between a service and a timeslot can be ensured.

With reference to the second aspect, in some implementations of the second aspect, the association relationship between the first timeslot and the service data includes: If the first timeslot is in an idle state, it indicates that the first timeslot does not carry the service data; the first timeslot is occupied by the service data; the first timeslot is configured to be added, to carry the service data; or the first timeslot is configured to be removed, not to carry the service data.

With reference to the second aspect, in some implementations of the second aspect, the first indication field is located in row 4 and column 15 of the overhead area of the data frame, and the second indication field is located in row 4 and columns 15 and 16 of the overhead area of the data frame.

With reference to the second aspect, in some implementations of the second aspect, the first timeslot is 16 bytes, the first indication field is two bits, and the second indication field is 10 bits.

With reference to the second aspect, in some implementations of the second aspect, the overhead area further includes a first optical payload unit multiframe indication, a second optical payload unit multiframe indication, and a multiframe alignment signal, and the first timeslot satisfies: TS=A*119+B*6+C. TS is the first timeslot, A is the first optical payload unit multiframe indication, B is the second optical payload unit multiframe indication, C is the multiframe alignment signal, B is an integer greater than or equal to 0 and less than or equal to 19, and C is an integer greater than or equal to 1 and less than or equal to 6.

With reference to the second aspect, in some implementations of the second aspect, the first optical payload unit multiframe indication is three bits, the second optical payload unit multiframe indication is five bits, and the multiframe alignment signal is three bits.

With reference to the second aspect, in some implementations of the second aspect, when the data frame includes an optical payload unit 0 frame, a value of A is 0, the payload area includes N periods, each period includes timeslots 1 to 119, and the first optical payload unit multiframe indication indicates timeslots 1 to 119 in a $1^{st}$ period in row 4 of the payload area of the data frame.

With reference to the second aspect, in some implementations of the second aspect, when the data frame includes an optical payload unit 0 frame at a double rate, a value of A is 0 or 1, the payload area includes N periods, and each period includes timeslots 1 to 238. When the value of A is 0, the first optical payload unit multiframe indication indicates timeslots 1 to 119 in row 4 of the payload area of the data frame; when the value of A is 1, the first optical payload unit multiframe indication indicates timeslots 120 to 238 in row 4 of the payload area of the data frame.

Based on the foregoing solution, it may be determined, by using the first optical payload unit multiframe indication, whether an association relationship between a service and a timeslot that is carried in a current data frame corresponds to timeslots 1 to 119 or timeslots 120 to 238.

With reference to the second aspect, in some implementations of the second aspect, the data frame is an optical transport network OTN frame.

According to a third aspect, a data frame is provided. The data frame includes an overhead area and a payload area, the overhead area includes a first indication field and a second indication field, the first indication field indicates a status of a first timeslot in the payload area, and the second indication field indicates an association relationship between the first timeslot and service data.

With reference to the third aspect, in some implementations of the third aspect, the first indication field is located in row 4 and column 15 of the overhead area of the data frame, and the second indication field is located in row 4 and columns 15 and 16 of the overhead area of the data frame.

With reference to the third aspect, in some implementations of the third aspect, the first indication field is two bits, and the second indication field is 10 bits.

With reference to the third aspect, in some implementations of the third aspect, the overhead area further includes a first optical payload unit multiframe indication, a second optical payload unit multiframe indication, and a multiframe alignment signal, the first optical payload unit multiframe indication and the second optical payload unit multiframe indication are located in row 4 and column 16 of the overhead area of the data frame, the first optical payload unit multiframe indication is three bits, the second optical payload unit multiframe indication is five bits, and the multiframe alignment signal is three bits.

With reference to the third aspect, in some implementations of the third aspect, the data frame is an optical transport network OTN frame.

According to a fourth aspect, a data transmission apparatus is provided. The apparatus is configured to perform the method provided in the first aspect. Specifically, the communication apparatus may include a unit and/or a module configured to perform the method provided in any one of the first aspect or the foregoing implementations of the first aspect.

In an implementation, the apparatus is a transmitter device. Receiving and sending may be performed by a transceiver or an input/output interface. A processing module may be at least one processor. Optionally, the transceiver may be a transceiver circuit. Optionally, the input/output interface may be an input/output circuit.

In another implementation, the apparatus is a chip, a chip system, or a circuit in the transmitter device. A transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the apparatus shown in the fourth aspect and the possible designs of the fourth aspect, refer to the beneficial effects of the first aspect and the possible designs of the first aspect.

According to a fifth aspect, a data transmission apparatus is provided. The apparatus is configured to perform the method provided in the second aspect. Specifically, the communication apparatus may include a unit and/or a module configured to perform the method provided in any one of the second aspect or the foregoing implementations of the second aspect.

In an implementation, the apparatus is a receiver device. Receiving and sending may be performed by a transceiver or an input/output interface. A processing module may be at least one processor. Optionally, the transceiver may be a transceiver circuit. Optionally, the input/output interface may be an input/output circuit.

In another implementation, the apparatus is a chip, a chip system, or a circuit in the receiver device. A transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the apparatus shown in the fifth aspect and the possible designs of the fifth aspect, refer to the beneficial effects of the second aspect and the possible designs of the second aspect.

According to a sixth aspect, a processor is provided. The processor is configured to perform the methods provided in the foregoing aspects. Unless otherwise specified, or if operations such as sending and obtaining/receiving related to the processor do not conflict with actual function or internal logic of the processor in related descriptions, the operations may be understood as operations such as outputting, receiving, and inputting of the processor, or may be understood as sending and receiving operations performed by a radio frequency circuit and an antenna. This is not limited in this application.

According to a seventh aspect, a computer-readable storage medium is provided. The computer-readable storage medium stores program code to be executed by a device, and the program code includes the method provided in any one of the implementations of the first aspect or the second aspect.

According to an eighth aspect, a computer program product including instructions is provided. When the computer program product runs on a computer, the computer is enabled to perform the method provided in any one of the implementations of the first aspect or the second aspect.

According to a ninth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores a computer program or the instructions, the processor is configured to execute the computer program or the instructions stored in the memory, and when the computer program or the instructions are executed, the processor is configured to perform the method provided in any one of the implementations of the first aspect or the second aspect.

According to a tenth aspect, a communication system is provided. The communication system includes the data transmission apparatus according to the fourth aspect and the data transmission apparatus according to the fifth aspect.

**BRIEF DESCRIPTION OF DRAWINGS**

FIG. 1 is a schematic diagram of a possible application scenario according to an embodiment of this application;

FIG. 2 is a schematic diagram of a possible hardware structure of a network device;

FIG. 3 is a schematic diagram of a frame structure of an OTN frame;

FIG. 4 is a schematic diagram of a frame structure of an OTN frame according to an embodiment of this application;

FIG. 5 is a schematic diagram of a frame structure of an OPUO multiframe according to an embodiment of this application;

FIG. 6 is a schematic diagram of byte division in row 4 of the frame structure of the OPUO multiframe shown in FIG. 5;

FIG. 7 is a schematic diagram of a frame structure of an OPUflex multiframe according to an embodiment of this application;

FIG. 8 is a schematic diagram of byte division in row 4 of the frame structure of the OPUflex multiframe shown in FIG. 7;

FIG. 9 is a schematic flowchart of a data transmission method according to an embodiment of this application; and

FIG. 10 is a schematic diagram of a structure of a data transmission apparatus according to an embodiment of this application.

## DESCRIPTION OF EMBODIMENTS

The following describes technical solutions of embodiments in this application with reference to the accompanying drawings.

Embodiments of this application are applicable to an optical network such as an OTN. An OTN is usually formed by a plurality of devices interconnected through optical fibers, and may be formed into different topology types such as a linear topology, a ring topology, and a mesh topology depending on specific requirements.

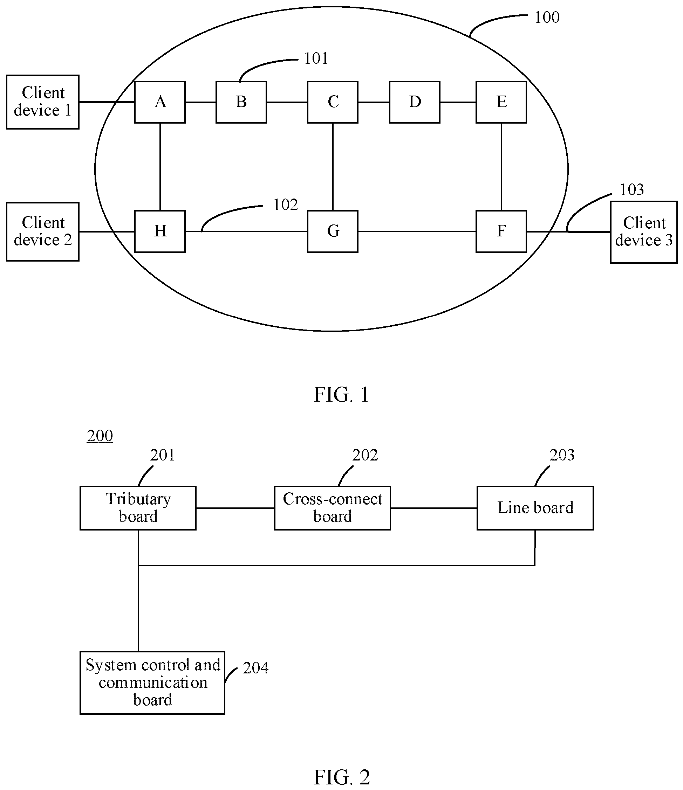

FIG. 1 is a schematic diagram of a possible application scenario according to an embodiment of this application. As shown in FIG. 1, an OTN 100 includes eight interconnected OTN devices 101, that is, devices A to H. 102 indicates an optical fiber used to connect two devices. 103 indicates a client service interface configured to receive or send client service data. As shown in FIG. 1, the OTN 100 is configured to transmit service data for client devices 1 to 3. The client device is connected to the OTN device through the client service interface. For example, in FIG. 1, the client devices 1 to 3 are respectively connected to the OTN devices A, H, and F.

Depending on actual requirements, an OTN device may have different functions. Generally, the OTN device includes an optical layer device, an electrical layer device, and a photoelectric hybrid device. The optical layer device is a device capable of processing an optical layer signal, for example, an optical amplifier (optical amplifier, OA) or an optical add/drop multiplexer (optical add/drop multiplexer, OADM). The OA may also be referred to as an optical line amplifier (optical line amplifier, OLA), and is mainly configured to amplify an optical signal, to support longer-distance transmission of the optical signal while specific performance of the optical signal is ensured. The OADM is configured to perform space transformation on the optical signal, so that the optical signal can be output from different output ports (sometimes referred to as directions). The electrical layer device is a device capable of processing an electrical layer signal, for example, a device capable of processing an OTN signal. The photoelectric hybrid device is a device capable of processing an optical layer signal and an electrical layer signal. It should be noted that, an OTN device may integrate a plurality of different functions depending on a specific integration requirement. The technical solution provided in this application is applicable to OTN devices including an electrical layer function that have different forms and integration levels.

It should be noted that a data frame structure used by the OTN device in embodiments of this application is an OTN frame. The OTN frame is used to carry various types of service data and provide rich management and monitoring functions. The OTN frame may be an optical data unit frame (Optical Data Unit k, ODUk), an ODUCn frame, an ODUflex frame, an optical transport unit k (optical transport unit k, OTUk) frame, an OTUCn frame, a flexible OTN (FlexO) frame, or the like. A difference between an ODU frame and an OTU frame is that the OTU frame includes the ODU frame and an OTU overhead. k represents different rate levels, for example, k=1 represents 2.5 Gbps, and k=4 represents 100 Gbps; and Cn represents a variable rate, specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. It should be further noted that with development of an OTN technology, a new type of OTN frame may be defined, and is applicable to this application.

FIG. 2 is a schematic diagram of a possible hardware structure of a network device, for example, one of the OTN devices A to H in FIG. 1. Specifically, an OTN device 200 includes a tributary board 201, a cross-connect board 202, a line board 203, an optical layer processing board (not shown), and a system control and communication board 204. It should be noted that, depending on specific requirements, types and quantities of boards included in the network device may be different. For example, a network device serving as a core node includes no tributary board 201. For another example, a network device serving as an edge node includes a plurality of tributary boards 201, or includes no optical cross-connect board 202. For still another example, a network device supporting only an electrical layer function may include no optical layer processing board.

The tributary board 201, the cross-connect board 202, and the line board 203 are configured to process an electrical layer signal of an OTN (for example, an ODU frame in the OTN). The tributary board 201 is configured to receive and send various client services, for example, a synchronous digital hierarchy (synchronous digital hierarchy, SDH) service, a packet service, an Ethernet service, and a fronthaul service. Further, the tributary board 201 may be divided into a client-side optical transceiver module and a signal processor. The client-side optical transceiver module may also be referred to as an optical transceiver, configured to receive and/or send service data. The signal processor is configured to map service data to a data frame and demap the service data from the data frame. The cross-connect board 202 is configured to exchange data frames, to complete exchange of one or more types of data frames. The line board 203 mainly processes a data frame on a line side. Specifically, the line board 203 may include a line-side optical module and a signal processor. The line-side optical module may be referred to as an optical transceiver, configured to receive and/or send a data frame. The signal processor is configured to multiplex and demultiplex a data frame on the line side, or map and demap a data frame on the line side. The system control and communication board 204 is configured to implement system control. Specifically, information may be collected from different boards, or control instructions may be sent to corresponding boards.

It should be noted that, unless otherwise specified, there may be one or more specific components (for example, signal processors). This is not limited in this application. A type of a board included in the device, a function design of the board, and a quantity of boards are not limited in this application. It should be further noted that during specific implementation, two boards mentioned above may be designed as one board. In addition, the network device may further include a standby power supply, a fan used for heat dissipation of the device, an auxiliary board for providing an external alarm or accessing an external clock, and the like.

For ease of understanding of embodiments of this application, the following descriptions are provided.

First, in embodiments of this application, "first", "second", and various numbers in embodiments shown below are merely used for differentiation for ease of description, and are not intended to limit the scope of embodiments of this application. Sequence numbers of the following processes do not mean execution sequences. The execution sequence of the processes should be determined based on functions and internal logic of the processes, and should not be construed as any limitation on the implementation processes of embodiments of this application.

Second, in the following embodiments of this application, the terms "include", "have", and any other variants mean to cover a non-exclusive inclusion, for example, a process, a method, a system, a product, or a device that includes a series of steps or units is not necessarily limited to those clearly listed steps or units, but may include another inherent step or unit not clearly listed or inherent to such a process, method, product, or device.

Third, in embodiments of this application, the term such as "example", "for example", or the like is used to represent an example, an illustration, or a description. Any embodiment or design scheme described with "example" or "for example" should not be explained as being more preferred or having more advantages than another embodiment or design scheme. A word such as "example" or "for example" is used to present a related concept in a specific manner for ease of understanding.

Fourth, in embodiments of this application, "protocols" may be standard protocols in the OTN field, for example, including the G.709 standard protocol of the ITU-T and related protocols applied to a future OTN system. This is not limited in this application.

Fifth, in embodiments of this application, "indicate" includes "directly indicate" and "indirectly indicate". When a piece of indication information indicates A, the indication information may directly indicate A or indirectly indicate A, but it does not indicate that the indication information definitely carries A.

Sixth, in embodiments of this application, a character "*" is an operator symbol, and represents multiplication.

Seventh, in embodiments of this application, an OTN frame (namely, an example of a data frame) is used as an example for description, and should not constitute any limitation on the technical solutions of this application. It should be understood that, for another OTN frame for carrying, or a metro transport network (metro transport network, MTN) frame, or with development of an OTN technology and an MTN technology, a new type of OTN frame and a new type of MTN frame may be defined, and are also applicable to this application.

With advent of a fifth generation fixed network (fifth generation fixed network, F5G) era, requirements of private line services in different scenarios are gradually refined, for example, an industry production network and a high-quality user terminal, and the private line services have an increasing requirement for a high-quality connection. These client services feature low bandwidth and a large quantity. Therefore, simple and flexible bandwidth adjustment is required. Currently, for normal transmission and lossless bandwidth adjustment scenarios, different overheads are defined, so that processing during bandwidth adjustment becomes complex. For example, a payload structure identifier (payload structure identifier, PSI) overhead is used to identify whether a timeslot is occupied, or a timeslot is occupied by each ODU pipe. For another example, an addition or removal relationship between a timeslot and an ODU pipe is defined by using a higher-order resize control overhead (resize control overhead, RCOH). In addition, quantities of timeslots and services increase with an increasing requirement for carrying the private line services. If a conventional solution is still used to define overheads, usage efficiency of the overheads is affected.

Therefore, how to consider overhead designs during normal transmission and bandwidth adjustment, and improve system transmission performance is an urgent problem to be resolved. In view of this, in the technical solutions of this application, a data transmission method and apparatus are provided. A first indication field and a second indication field are defined in an overhead area of a data frame, and both a status of a first timeslot in a payload area of the data frame and an association relationship between the first timeslot and service data can be indicated, so that in scenarios of normal transmission and lossless bandwidth adjustment, effective transmission of a correspondence between a timeslot and a service is ensured, an overhead design is simplified, and transmission performance is improved.

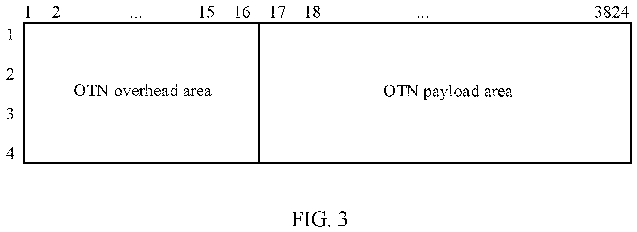

FIG. 3 is a schematic diagram of a frame structure of an OTN frame. As shown in FIG. 3, the frame structure of the OTN frame is a single-byte structure of 4 rows*3824 columns, where the first 4 rows*16 columns are an overhead area of the OTN frame, and remaining bytes are a payload area of the OTN frame. Specifically, for other features of the structure of the OTN frame, refer to related descriptions in a current protocol.

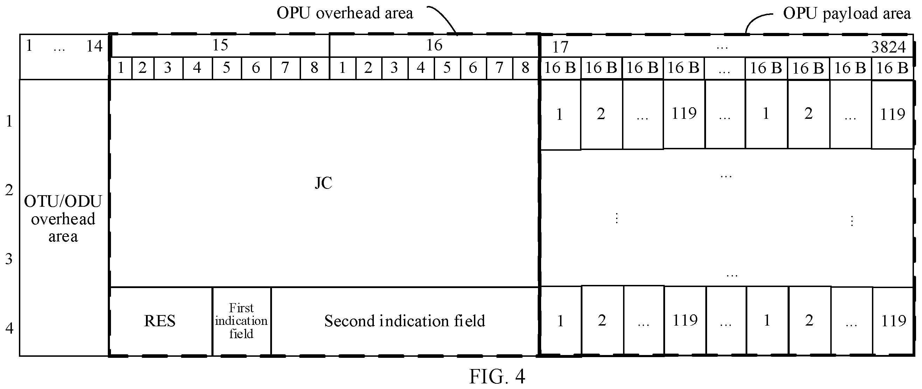

Based on the OTN frame shown in FIG. 3, FIG. 4 is a schematic diagram of a frame structure of an OTN frame according to an embodiment of this application. As shown in FIG. 4, the frame structure of the OTN frame is divided into 4 rows*3824 columns, and each row includes 3824 bytes, where the first 4 rows*14 columns are an OTU/ODU overhead area, the middle 4 rows*2 columns: columns 15 and 16, are an OPU overhead area, and the last 4 rows*3808 columns are an OPU payload area. For example, a timeslot block of a length of 16 bytes is defined in the OPU payload area, and a rate of the timeslot block of 16 bytes is defined to be approximately 10.4 M, so that a service at a granularity of 1238.95431 Mbit/s can be efficiently carried. The payload area is correspondingly divided into 119 timeslots, that is, the payload area represents a 16-byte structure of 4 rows*238 columns, and there are 8×119 timeslots in total. Therefore, in embodiments of this application, a payload area of one OTN frame may be divided into eight periods, and each period includes timeslots 1 to 119.

In addition, the first three rows of the OPU overhead area shown in FIG. 4 have six bytes in total, and are defined as a justification control (justification control, JC). The JC indicates that an object carried by a timeslot at a specific position in row 4 of the OPU payload area is data or padding. For example, if each bit in the first three rows of the OPU overhead area is defined as one JC, there are 16 JCs in the OPU overhead area in total. Correspondingly, the 16 JCs respectively indicate that objects carried by the first 16 timeslots in a 1$^{st}$ period in row 4 are data or padding. Bits 5 and 6 in row 4 and column 15 of the OPU overhead area, that is, two bits in total, are defined as a first indication field, and the first indication field indicates a status of a first timeslot in the OPU payload area. Bits 7 and 8 in row 4 and column 15 and bits 1 to 8 in row 4 and column 16 of the OPU overhead area, that is, 10 bits in total, are defined as a second indication field, and the second indication field indicates an association relationship between the first timeslot and service data. It should be noted that the first timeslot is a specific timeslot in row 4 of the OPU payload area. A manner of determining the first timeslot is described in detail below, and is not described herein first.

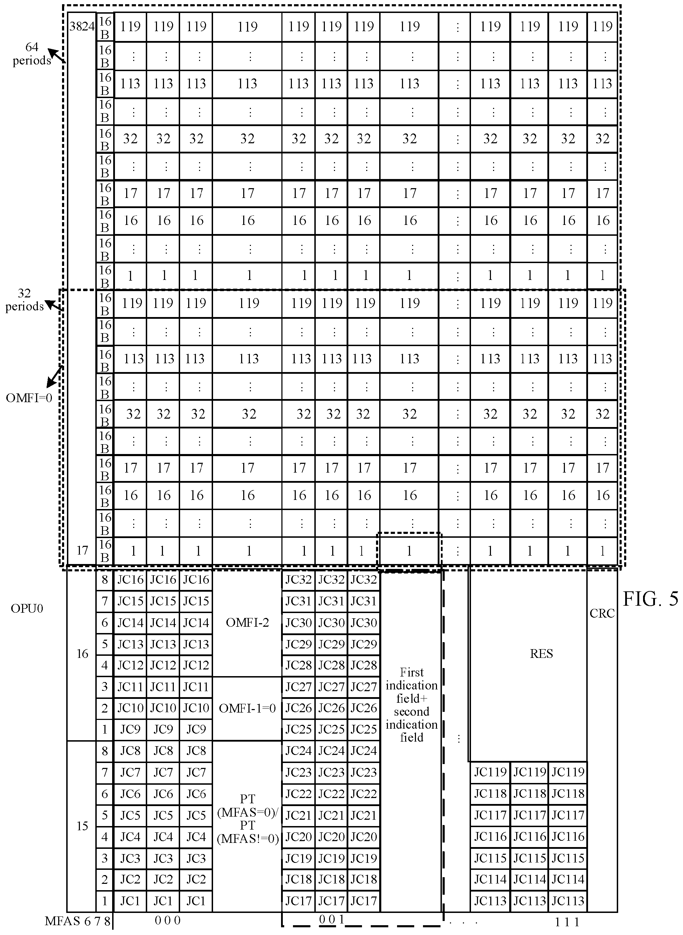

Based on the OTN frame shown in FIG. 4, FIG. 5 is a schematic diagram of a frame structure of an OPUO multiframe according to an embodiment of this application. As shown in FIG. 5, the OPUO multiframe includes eight OPUO single frames. For example, the eight OPUO single frames are respectively indicated by using bits 6 to 8 of a multiframe alignment signal (multiframe alignment signal, MFAS), that is, three bits in total, that is, 000 to 111. A structure of each OPUO single frame is 4 rows*3824 columns. In other words, the frame structure of the OPUO multiframe is divided into 32 rows*3824 columns, and each row includes 3824 bytes, where the first 32 rows*14 columns are an OTU/ODU overhead area (not shown), the middle 32 rows*2 columns: columns 15 and 16, are an OPUO overhead area, and the last 32 rows*3808 columns are an OPUO payload area. For example, if a timeslot block of a length of 16 bytes is defined in the OPUO payload area, and a rate of the timeslot block of 16 bytes is defined to be approximately 10.4 M, the OPUO payload area represents a 16-byte structure of 32 rows*238 columns, and there are timeslots 1 to 119 of 64 periods in total. Therefore, in embodiments of this application, a payload area of one OPUO multiframe may be divided into 64 periods, and each period includes timeslots 1 to 119.

In addition, the first three rows of each data frame in the overhead area (columns 15 and 16) shown in FIG. 5 are JCs. Therefore, the OPUO multiframe has 119 JCs in total, and each OPUO single frame includes 16 JCs. Specifically, in an OPUO single frame 1, row 4 of the overhead area includes a payload type (payload type, PT), a first optical payload unit multiframe indication (optical multiple frame indication-1, OMFI-1), and a second optical payload unit multiframe indication OMFI-2. The OMFI-1 in each OPUO single frame in the OPUO multiframe is equal to 0, the OMFI-1 is located in bits 1 to 3 in column 16, that is, three bits in total, and the OMFI-2 is located in bits 4 to 8 in column 16, that is, five bits in total. In OPUO single frames 2 to 7, row 4 of an overhead area of each OPUO single frame includes a first indication field and a second indication field, the first indication field indicates a status of a first timeslot in a payload area of a corresponding OPUO single frame, and the second indication field indicates an association relationship between the first timeslot and service data. It should be understood that, in each of the OPUO single frames 2 to 7, the first timeslot is a specific timeslot in timeslots 1 to 119 in a 1$^{st}$ period in row 4 of the payload area of the corresponding OPUO single frame. For example, in the OPUO single frame 2 (corresponding to bits 001 of an MFSI) marked in the figure, the first indication field in row 4 of the overhead area indicates a status of a 1$^{st}$ timeslot 1 in row 4 of the payload area of the OPUO single frame, and the second indication field indicates an association relationship between the timeslot 1 and the service data. Similarly, in the OPUO single frame 7 (corresponding to bits 110 of the MFSI), the first indication field in row 4 of the overhead area indicates a status of a 1$^{st}$ timeslot 6 in row 4 of the payload area of the OPUO single frame, and the second indication field indicates an association relationship (not shown) between the timeslot 6 and the service data. A first indication field and a second indication field in another OPUO single frame have similar meanings. For brevity, details are not described herein again. In an OPUO single frame 8, row 4 is used to transmit a cyclic redundancy check (cyclic redundancy check, CRC) code.

Therefore, according to the foregoing definition, with reference to FIG. 5, it can be learned that one first indication field may be sent by using an overhead area of one OPUO single frame, and the first indication field indicates a status of a timeslot in a 1st period in row 4 of a payload area of the OPUO single frame; and one second indication field may be sent by using the overhead area of the OPUO single frame, and the second indication field indicates an association relationship between the timeslot and the service data. In other words, the eight OPUO single frames shown in FIG. 5 may indicate statuses of six first timeslots and the association relationships between the first timeslots and the service data. Therefore, a transmitter device needs to send at least 20 OPUO single frames to indicate 119 timeslots at specific positions in 32 periods (marked in the figure) of the payload area of the OPUO multiframe.

It should be noted that, in the OPUO multiframe shown in FIG. 5, it may be understood as that timeslots in the first three rows in the payload area of each OPUO single frame are used for normal transmission of the service data, and some specific timeslots in row 4 may be used to determine a correspondence between the specific timeslot and the service data based on meanings of the first indication field and the second indication field during bandwidth adjustment. For example, payload areas of the OPUO single frames 1 and 8 may be used for normal transmission of the service data, the 1st timeslot 1 in row 4 of the payload area of the OPUO single frame 2 may be used for bandwidth adjustment, a 1st timeslot 2 in row 4 of the payload area of the OPUO single frame 3 may be used for bandwidth adjustment, and by analogy, a 1st timeslot 6 in row 4 of the payload area of the OPUO single frame 7 may be used for bandwidth adjustment. Therefore, based on the foregoing solution, scenarios of both normal transmission of the service data and bandwidth adjustment can be considered, an overhead design can be simplified, and reliability of system transmission performance can be ensured.

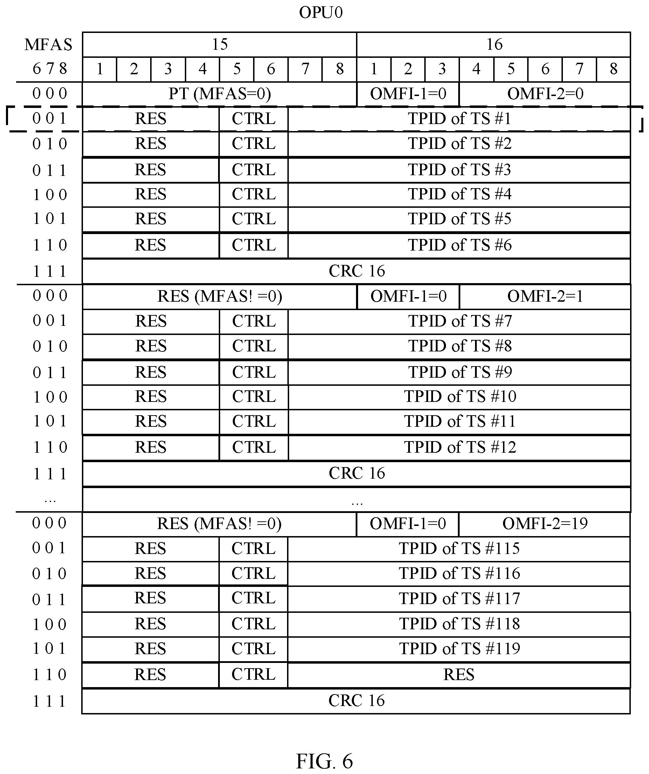

Next, based on the structure of the OPUO multiframe shown in FIG. 5, with reference to FIG. 6, the status of the first timeslot that is indicated by the first indication field, the association relationship between the first timeslot and the service data that is indicated by the second indication field, and a manner of determining the first timeslot are specifically described.

FIG. 6 is a schematic diagram of byte division in row 4 of the frame structure of the OPUO multiframe shown in FIG. 5. As shown in FIG. 6, in an overhead area of columns 15 and 16 of the OPUO multiframe, format content including overheads in rows 4 of 20 8-frames is represented. A value of the OMFI-1 is 0, and the format content indicates the 119 timeslots at the specific positions in the 32 periods shown in FIG. 5, for example, including the timeslot 1 in row 4 of the payload area of the OPUO single frame 2 (where a dashed-line box marked in FIG. 6 corresponds to a dashed-line box of the overhead area shown in FIG. 5 and the timeslot 1 marked in the payload area shown in FIG. 5), the timeslot 2 in row 4 of the payload area of the OPUO single frame 3, ..., and a timeslot 119 in row 4 of a payload area of an OPUO single frame 158. A value of the OMFI-2 is an integer ranging from 0 to 19 that corresponds to 20 8-frames in sequence. In embodiments of this application, the first indication field is defined as a control CTRL field, that is, the CTRL field includes two bits. The second indication field is defined as a tributary port identifier, which is also referred to as a tag protocol identifier (tag protocol identifier, TPID) field, that is, the TPID field includes 10 bits.

For example, the two bits of the CTRL field are 00, 01, 10, or 11. With reference to a mapping relationship that is between the first timeslot and the service data and that is indicated by the TPID field, when the CTRL field is 00, it indicates that the first timeslot is in an idle (idle) state. This may be understood as that the first timeslot is not occupied by any service data. In other words, the service data carried in the foregoing data frame does not occupy the first timeslot. This may be understood as that the service data corresponding to the TPID field does not occupy the first timeslot. Therefore, when a receiver device determines, based on the CTRL field, that the first timeslot is in the idle state, the receiver device may not further decode the TPID field. When the CTRL field is 01, it indicates that the first timeslot is in an occupied (occupied) state. This may be understood as that the service data corresponding to the TPID field occupies the first timeslot. In other words, when the CTRL field is 01, it indicates that the first timeslot is in a normal (normal) state. This may be understood as that the service data corresponding to the TPID field is normally transmitted in the first timeslot. When the CTRL field is 10, it indicates that the first timeslot is to be added (added). This may be understood as that the first timeslot is to be added during bandwidth adjustment, and is used to carry the service data corresponding to the TPID field. When the CTRL field is 11, it indicates that the first timeslot is to be removed (removed). This may be understood as that the first timeslot is to be removed during bandwidth adjustment, and is not used to carry the service data corresponding to the TPID field. Bit values of the CTRL field and the TPID field, and timeslot statuses corresponding to different bits are merely examples provided for ease of understanding. This shall not constitute any limitation on the technical solutions of this application.

Specifically, the first timeslot satisfies:

$$TS = A*119 + B*6 + C \ (1)$$

TS is the first timeslot, A is the OMFI-1, B is the OMFI-2, and C is the MFAS.

For example, overheads of row 4 of a 1st 8-frame shown in FIG. 6 correspond to overheads of rows 4 of the eight data frames shown in FIG. 5. The OMFI-1 is equal to 0, the OMFI-2 is equal to 0, and three bits of the MFAS are respectively 000 to 111. For example, when a value of three bits of the MFAS is equal to 001, corresponding to a data frame 2 shown in FIG. 5, a status of a TS #1 (namely, the first timeslot) corresponding to the CTRL field and the TPID field in row 4, and a relationship between the TS #1 and the service data can be learned through calculation according to the formula (1). Assuming that the CTRL field is 10, it indicates that the TS #1 (that is, a 1st timeslot 1 in a 1st period in row 4 of an OPUO payload area of the data frame 2 shown in FIG. 5) is to be added during bandwidth adjustment, that is, service data corresponding to the TS #1 occupies the TS #1 for transmission. For another example, when a value of three bits of the MFAS is equal to 101, corresponding to a data frame 6 shown in FIG. 5, a status of a TS #5 (namely, the first timeslot) corresponding to the CTRL field and the TPID field in row 4, and a relationship between the TS #5 and the service data can be learned through calculation according to the formula (1). Assuming that the CTRL field is 11, it indicates that the TS #5 (that is, a 1st timeslot 5 in a 1st period in row 4 of an OPUO payload area of a data frame 5 shown in FIG. 5) is to be removed during bandwidth adjustment, that is, service data corresponding to the TS #5 does not occupy the TS #5 for transmission. Similarly, overheads in row 4 of another OPU 0 frame shown in FIG. 6 indicate, according to the indication method of the CTRL field and the TPID field in the foregoing example, a status of a first timeslot at a specific position in an OPUO payload area and a mapping relationship between the first timeslot and the service data. For brevity, details are not described herein again.

Based on the foregoing solution, the first indication field and the second indication field are defined in the OPU overhead area, and both the status of the first timeslot and the association relationship between the first timeslot and the service data are indicated, so that an overhead design can be simplified, overheads can be reduced, and especially in scenarios of normal transmission and bandwidth adjustment, effective transmission of a correspondence between a service and a timeslot can be ensured.

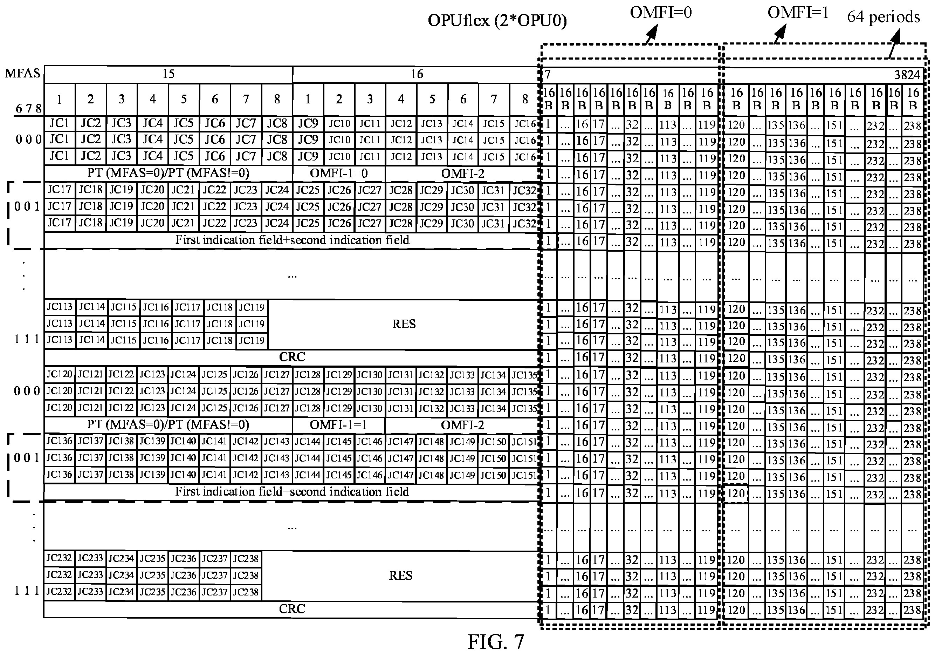

Based on the OTN frame shown in FIG. 4, FIG. 7 is a schematic diagram of a frame structure of a 2*OPU0 multiframe according to an embodiment of this application. As shown in FIG. 7, a rate of the 2*OPU0 multiframe is double that of the OPUO multiframe shown in FIG. 5. The 2*OPU0 multiframe includes 16 OPUO single frames. For example, the 16 OPUO single frames are indicated by using bits 000 to bits 111 of an MFAS twice, and a structure of each OPUO single frame is 4 rows*3824 columns. In other words, the frame structure of the 2*OPU0 multiframe is divided into 64 rows*3824 columns, where the first 64 rows*14 columns are an OTU/ODU overhead area (not shown), the middle 64 rows*2 columns: columns 15 and 16, are a 2*OPU0 overhead area, and the last 32 rows*3808 columns are a 2*OPU0 payload area. For example, if a timeslot block of a length of 16 bytes is defined in the 2*OPU0 payload area, and a rate of the timeslot block of 16 bytes is defined to be approximately 10.4 M, the 2*OPU0 payload area represents a 16-byte structure of 64 rows*238 columns, and there are timeslots 1 to 238 of 64 periods in total. Therefore, in embodiments of this application, a payload area of one 2*OPU0 multiframe may be divided into 64 periods, and each period includes timeslots 1 to 238.

In addition, the first three rows of each data frame in the overhead area (columns 15 and 16) shown in FIG. 7 are JCs. Therefore, the 2*OPU0 multiframe has 238 JCs in total, and each OPUO single frame includes 16 JCs. Specifically, in each of OPUO single frames 1 to 9, row 4 of an overhead area includes a PT, an OMFI-1, and an OMFI-2. The OMFI-1 is located in bits 1 to 3 of column 16, that is, three bits in total. The OMFI-2 is located in bits 4 to 8 of column 16, that is, five bits in total. The OMFI-1 of each of the OPUO single frames 1 to 8 is equal to 0, and an OMFI-1 of each of OPUO single frames 9 to 16 is equal to 1. In the OPUO single frames 2 to 7 and 10 to 15, row 4 of an overhead area of each OPUO single frame includes a first indication field and a second indication field, the first indication field indicates a status of a first timeslot in a payload area of a corresponding OPUO single frame, and the second indication field indicates an association relationship between the first timeslot and service data. It should be understood that, in each of the OPUO single frames 2 to 7, the first timeslot is a specific timeslot in timeslots 1 to 119 in row 4 of the payload area of the corresponding OPUO single frame, and in each of the OPUO single frames 10 to 15, the first timeslot is a specific timeslot in timeslots 120 to 238 in row 4 of the payload area of the corresponding OPUO single frame. For example, in the OPUO single frame 2 (corresponding to bits 001 of an MFSI) marked in the figure, the first indication field in row 4 of the overhead area indicates a status of a timeslot 1 in row 4 of the payload area of the OPUO single frame, and the second indication field indicates an association relationship between the timeslot 1 and the service data. For another example, in the OPUO single frame 10 (corresponding to bits 001 of an MFSI) marked in the figure, the first indication field in row 4 of the overhead area indicates a status of the timeslot 120 in row 4 of the payload area of the OPUO single frame, and the second indication field indicates an association relationship between the timeslot 120 and the service data. A first indication field and a second indication field in another OPUO single frame have similar meanings. For brevity, details are not described herein again. In the OPUO single frames 8 and 16, row 4 is used to transmit a CRC code.

Therefore, according to the foregoing definition, with reference to FIG. 6, it can be learned that a transmitter device needs to send at least 40 OPUO single frames to indicate statuses of 238 timeslots at specific positions in the payload area of the 2*OPU0 multiframe and association relationships between the timeslots and the service data. For example, the first 20 OPUO single frames indicate the timeslots 1 to 119 at specific positions in a left dashed-line box, and the last 20 OPUO single frames indicate the timeslots 120 to 238 at specific positions in a right dashed-line box.

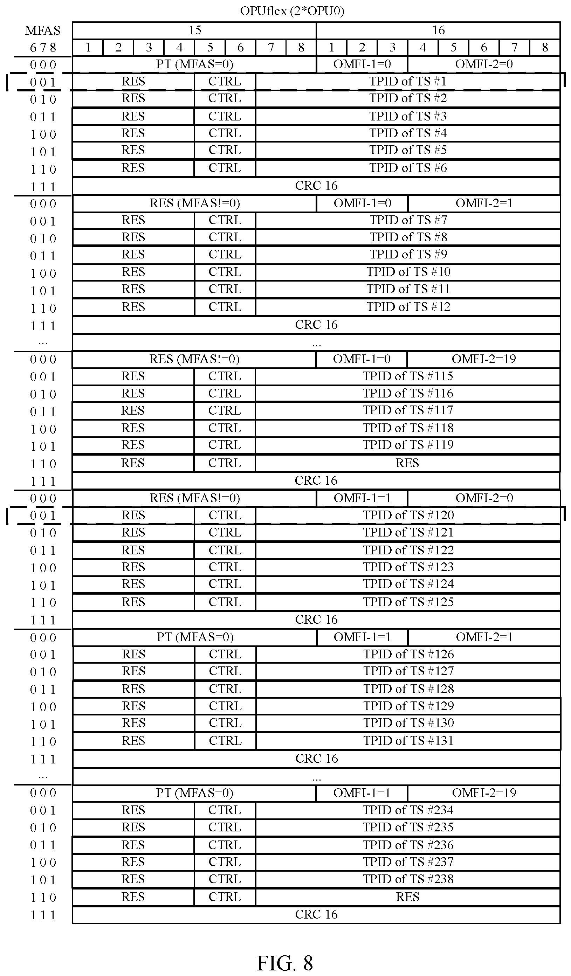

Next, based on the structure of the 2*OPU0 multiframe shown in FIG. 7, with reference to FIG. 8, the status of the first timeslot that is indicated by the first indication field, and the association relationship between the first timeslot and the service data that is indicated by the second indication field are specifically described.

FIG. 8 is a schematic diagram of byte division in row 4 of the frame structure of the 2*OPU0 multiframe shown in FIG. 7. As shown in FIG. 8, in the overhead area of columns 15 and 16 of the 2*OPU0 multiframe, format content including overheads in rows 4 of 40 8-frames is represented. A value of each OMFI-1 of the first 20 OPUO single frames is 0, and the format content indicates the timeslots 1 to 119 at the specific positions in the left dashed-line box in the payload area shown in FIG. 7, for example, the timeslot 1 in row 4 of the payload area of the OPUO single frame 2 (where a 1st dashed-line box marked in FIG. 8 corresponds to a 1st dashed-line box in the overhead area shown in FIG. 7, and the timeslot 1 marked in the payload area shown in FIG. 7). Another timeslot is indicated in a similar manner. For brevity, details are not described again. A value of an OMFI-1 of the last 20 OPUO single frames is 1, and the format content indicates the timeslots 120 to 238 at the specific positions in the right dashed-line box in the payload area shown in FIG. 7, for example, the timeslot 120 in row 4 of a payload area of an OPUO single frame 22 (where a 2nd dashed-line box marked in FIG. 8 corresponds to a 2nd dashed-line box in the overhead area shown in FIG. 7, and the timeslot 120 marked in the payload area shown in FIG. 7). Another timeslot is indicated in a similar manner. For brevity, details are not described again. A value of an OMFI-2 is an integer ranging from 0 to 19. Similarly, the first indication field is defined as a CTRL field, and the second indication field is defined as a TPID field. For indication meanings of the CTRL field and the TPID field, refer to related descriptions in FIG. 6. In addition, for a manner of determining the first timeslot, refer to related descriptions in FIG. 6. For brevity, details are not described again.

Based on the foregoing solution, the first indication field and the second indication field are defined in the OPU overhead area, and both the status of the first timeslot and the association relationship between the first timeslot and the service data are indicated, so that an overhead design can be simplified, overheads can be reduced, and especially in scenarios of normal transmission and bandwidth adjustment, effective transmission of a correspondence between a service and a timeslot can be ensured.

It should be noted that an example in which a rate of OPUflex shown in FIG. 7 and FIG. 8 is double that of the OPUO (that is, a timeslot at a granularity of 10.4 M is divided in an OPU payload area, and a corresponding timeslot rate is 1238.95431 Mbit/s) is used for description. Optionally, the OPUflex may alternatively be another OPU frame at a different rate. This is not specifically limited in this application.

It should be further noted that the frame structures shown in FIG. 4 to FIG. 8 are described by using a timeslot block of a size of 16 bytes as an example. Optionally, in the frame structures in embodiments of this application, timeslot division may be performed on a timeslot by using a size of eight bytes. When timeslot division is performed by using the size of eight bytes, a quantity of timeslots included in each period in the OPU payload area is 238. In this case, a quantity of JC overheads in the OPU overhead area is 238, the transmitter device needs to send at least 40 8-frames that each carry a first indication field and a second indication field respectively indicating a status of a timeslot at a specific position in the payload area and a mapping relationship between the timeslot and the service data. Alternatively, a quantity of timeslots included in each period in the OPU payload area is 476, or the like. In this case, a quantity of JC overheads in the OPU overhead area is 476, and 80 8-frames each need to carry a first indication field and a second indication field respectively indicating a status of a timeslot at a specific position in the OPU payload area and a mapping relationship between the timeslot and the service data. For indication manners of the first indication field and the second indication field, and a manner of determining the timeslot at the specific position, refer to related descriptions in FIG. 5 to FIG. 8. For brevity, details are not described herein again.

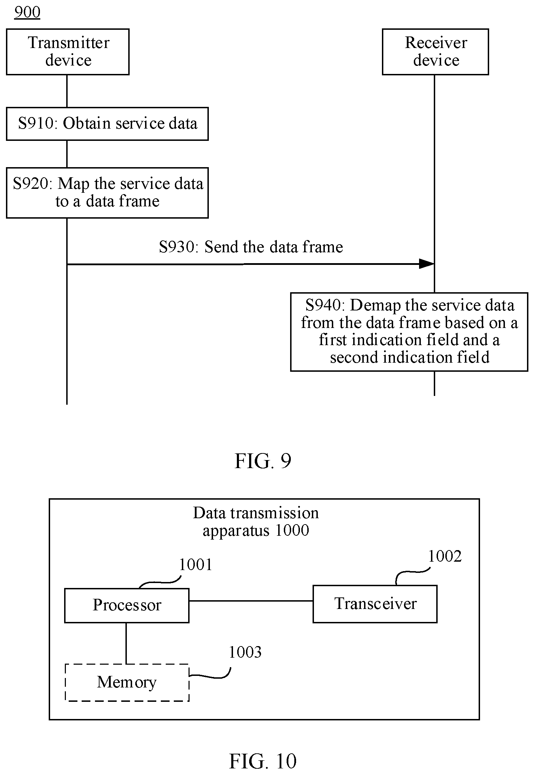

FIG. 9 is a schematic flowchart of a data transmission method 900 according to an embodiment of this application. As shown in FIG. 9, a function of a transmitter device may be executed by an OTN device, or a component (such as a chip or a chip system) of the OTN device. A function of a receiver device may be executed by an OTN device, or a component (such as a chip or a chip system) of the OTN device. Specifically, the method 900 includes the following plurality of steps.

S910: The transmitter device obtains service data.

For example, the service data refers to a service carried by an optical transport network or a metro transport network. For example, the service data includes but is not limited to an Ethernet service, a packet service, and a wireless backhaul service. The service data may also be referred to as a service signal, client data, or client service data. It should be understood that a type of the service data is not limited in embodiments of this application.

In embodiments of this application, the transmitter device may be the foregoing OTN device (for example, the OTN device A shown in FIG. 1), and receive the service data from a client device (for example, the client device shown in FIG. 1). Alternatively, the transmitter device is another device that can implement a function of the OTN device. A specific form of the transmitter device is not limited in embodiments of this application, provided that the transmitter device can implement a corresponding communication function. It should be understood that a device may be referred to as a node or a node device, and a sending device may be referred to as a sending node, a transmitter, or a source node. Similarly, a receiving device may be referred to as a receiver device, a receiver, or a sink node.

S920: The transmitter device maps the service data to a data frame.

For example, the transmitter device may map the service data to the data frame shown in FIG. 4, FIG. 5, or FIG. 7.

S930: The transmitter device sends the data frame to the receiver device.

Correspondingly, the receiver device receives the data frame from the transmitter device.

For example, the transmitter device may directly send the data frame (for example, an OTN frame) to the receiver device, or may encapsulate the data frame into a carrier container (an ODU frame), and then send the ODU frame to the receiver device. This is not specifically limited in this application.

S940: The receiver device demaps the service data from the data frame based on a first indication field and a second indication field.

It should be noted that, in embodiments of this application, an implementation in which the receiver device demaps the service data from the received data frame is not limited. For details, refer to descriptions of demapping in a current conventional technology.

For example, the receiver device may determine, based on the first indication field and the second indication field in an overhead area of the data frame, a status of a timeslot at a specific position in row 4 of a payload area of the data frame, and a relationship between the timeslot and the service data. For example, in the overhead area of the data frame sent by the transmitter device, an MFAS is equal to 3 (corresponding to bits 011), an OMFI-1 is equal to 1, an OMFI-2 is equal to 0 (corresponding to a $4^{th}$ data frame in a $21^{st}$ 8-frame shown in FIG. 8), and the first indication field corresponds to bits 10. In this case, the receiver device may determine, according to the foregoing formula (1), that the first timeslot is a TS #122, that is, the timeslot 122 in row 4 of the payload area of the data frame, and determines, based on the TS #122, a service corresponding to a TPID field, and determines that the TS #122 is to be removed during bandwidth adjustment, and the TS #122 is not used to carry the service data. The solution disclosed in this application provides a common overhead design for normal transmission and lossless bandwidth adjustment, to reduce overheads and improve transmission performance.

It should be understood that the specific examples shown in FIG. 4 to FIG. 9 in embodiments of this application are merely intended to help a person skilled in the art better understand embodiments of this application, but are not intended to limit the scope of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the OTN device) in an existing network architecture is mainly used as an example for description. A specific form of the device is not limited in embodiments of this application. For example, all devices that can implement a same function in the future are applicable to this application.

The data transmission method provided in embodiments of this application is described in detail above with reference to FIG. 4 to FIG. 9. The foregoing data transmission method is mainly described from a perspective of interaction between the receiver device and the transmitter device. It may be understood that, to implement the foregoing functions, the transmitter device and the receiver device include corresponding hardware structures and/or software modules for performing the function.

A data transmission apparatus provided in embodiments of this application is described in detail below with reference to FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, function modules of a transmitter device or a receiver device may be divided based on the foregoing method examples. For example, function modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 10 is a schematic diagram of a structure of a data transmission apparatus according to an embodiment of this application. As shown in FIG. 10, the apparatus 1000 includes a processor 1001, a transceiver 1002, and a memory 1003. The memory 1003 is optional. The apparatus 1000 may be used in both a transmit side device (for example, the foregoing transmitter device) and a receive side device (for example, the foregoing receiver device).

When the apparatus 1000 is used in the transmitter device, the processor 1001 and the transceiver 1002 are configured to implement the method performed by the transmitter device shown in FIG. 9. In an implementation process, each step of the processing procedure may complete, by using an integrated logic circuit of hardware in the processor 1001 or an instruction in a form of software, the method performed by the transmitter device in the foregoing accompanying drawings. The transceiver 1002 is configured to receive a data frame, to send the data frame to a peer device (which is also referred to as the receiver device).

When the apparatus 1000 is used in the receiver device, the processor 1001 and the transceiver 1002 are configured to implement the method performed by the receiver device shown in FIG. 9. In an implementation process, each step of the processing procedure may complete, by using an integrated logic circuit of hardware in the processor 1001 or an instruction in a form of software, the method performed by the receiver device in the foregoing accompanying drawings. The transceiver 1002 is configured to receive a data frame sent by the peer device (which is also referred to as the transmitter device), to send the data frame to the processor 1001 for subsequent processing.

The memory 1003 is configured to store instructions, so that the processor 1001 may be configured to perform the steps mentioned in the foregoing figure. Alternatively, the memory 1003 is also configured to store other instructions, to configure a parameter of the processor 1001 to implement a corresponding function.

It should be noted that, in the diagram of the hardware structure of the network device shown in FIG. 2, the processor 1001 and the memory 1003 may be located in a tributary board, or may be located in a board in which a tributary and a line are integrated. Alternatively, a plurality of processors 1001 and a plurality of memories 1003 are respectively located on a tributary board and a line board. The tributary board and the line board cooperate to complete the foregoing method steps.

It is clear that a person skilled in the art can make various modifications and variations to embodiments of this application without departing from the scope of embodiments of this application. In this way, this application is intended to cover these modifications and variations of embodiments of this application provided that they fall within the scope of the claims of this application and their equivalent technologies.

It should be understood that, the processor mentioned in embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

A person of ordinary skill in the art may know that, with reference to the examples described in embodiments disclosed in this specification, units and steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, and it should be considered that the implementation fall within the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one place, or may be distributed on a plurality of network units. Some or all of the units may be selected based on actual requirements to implement the solutions provided in this application. In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, an optical medium, a semiconductor medium, or the like. For example, the foregoing usable medium may include but is not limited to any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall be subject to the protection scope of the claims.

## Claims

1. A data transmission method, comprising:

   obtaining service data;
   mapping the service data to a data frame, wherein the data frame comprises an overhead area and a payload area, the overhead area comprises a first indication field and a second indication field, the first indication field indicates a status of a first timeslot in the payload area, and the second indication field indicates an association relationship between the first timeslot and the service data; and
   sending the data frame.

2. The method according to claim 1, wherein the association relationship between the first timeslot and the service data comprises:

   if the first timeslot is in an idle state, it indicates that the first timeslot does not carry the service data;
   the first timeslot is occupied by the service data;
   the first timeslot is configured to be added, to carry the service data; or
   the first timeslot is configured to be removed, not to carry the service data.

3. The method according to claim 1 or 2, wherein the first indication field is located in row 4 and column 15 of the overhead area of the data frame, and the second indication field is located in row 4 and columns 15 and 16 of the overhead area of the data frame.

4. The method according to any one of claims 1 to 3, wherein the first timeslot is 16 bytes, the first indication field is two bits, and the second indication field is 10 bits.

5. The method according to claim 3 or 4, wherein the overhead area further comprises a first optical payload unit multiframe indication, a second optical payload unit multiframe indication, and a multiframe alignment signal, and the first timeslot satisfies:

$$TS=A*119+B*6+C,$$

   wherein
   TS is the first timeslot, A is the first optical payload unit multiframe indication, B is the second optical payload unit multiframe indication, C is the multiframe alignment signal, B is an integer greater than or equal to 0 and less than or equal to 19, and C is an integer greater than or equal to 1 and less than or equal to 6.

6. The method according to claim 5, wherein the first optical payload unit multiframe indication is three bits, the second optical payload unit multiframe indication is five bits, and the multiframe alignment signal is three bits.

7. The method according to claim 5 or 6, wherein when the data frame comprises an optical payload unit 0 frame, a value of A is 0, the payload area comprises N periods, each period comprises timeslots 1 to 119, and the first optical payload unit multiframe indication indicates timeslots 1 to 119 in a 1st period in row 4 of the payload area of the data frame.

8. The method according to claim 5 or 6, wherein when the data frame comprises an optical payload unit 0 frame at a double rate, a value of A is 0 or 1, the payload area comprises N periods, and each period comprises timeslots 1 to 238; and
when the value of A is 0, the first optical payload unit multiframe indication indicates timeslots 1 to 119 in row 4 of the payload area of the data frame; when the value of A is 1, the first optical payload unit multiframe indication indicates timeslots 120 to 238 in row 4 of the payload area of the data frame.

9. The method according to any one of claims 1 to 8, wherein the data frame is an optical transport network OTN frame.

10. A data transmission method, comprising:

   receiving a data frame; and
   demapping service data from the data frame based on a first indication field and a second indication field, wherein the data frame comprises an overhead area and a payload area, the overhead area comprises the first indication field and the second indication field, the first indication field indicates a status of a first timeslot in the payload area, and the second indication field indicates an association relationship between the first timeslot and the service data.

11. The method according to claim 10, wherein the association relationship between the first timeslot and the service data comprises:

   if the first timeslot is in an idle state, it indicates that the first timeslot does not carry the service data;
   the first timeslot is occupied by the service data;
   the first timeslot is configured to be added, to carry the service data; or

the first timeslot is configured to be removed, not to carry the service data.

12. The method according to claim 10 or 11, wherein the first indication field is located in row 4 and column 15 of the overhead area of the data frame, and the second indication field is located in row 4 and columns 15 and 16 of the overhead area of the data frame.

13. The method according to any one of claims 10 to 12, wherein the first timeslot is 16 bytes, the first indication field is two bits, and the second indication field is 10 bits.

14. The method according to claim 12 or 13, wherein the overhead area further comprises a first optical payload unit multiframe indication, a second optical payload unit multiframe indication, and a multiframe alignment signal, and the first timeslot satisfies:

$$TS=A*119+B*6+C,$$

wherein
TS is the first timeslot, A is the first optical payload unit multiframe indication, B is the second optical payload unit multiframe indication, C is the multiframe alignment signal, B is an integer greater than or equal to 0 and less than or equal to 19, and C is an integer greater than or equal to 1 and less than or equal to 6.

15. The method according to claim 14, wherein the first optical payload unit multiframe indication is three bits, the second optical payload unit multiframe indication is five bits, and the multiframe alignment signal is three bits.

16. The method according to claim 14 or 15, wherein when the data frame comprises an optical payload unit 0 frame, a value of A is 0, the payload area comprises N periods, each period comprises timeslots 1 to 119, and the first optical payload unit multiframe indication indicates timeslots 1 to 119 in a 1st period in row 4 of the payload area of the data frame.

17. The method according to claim 14 or 15, wherein when the data frame comprises an optical payload unit 0 frame at a double rate, a value of A is 0 or 1, the payload area comprises N periods, and each period comprises timeslots 1 to 238; and
when the value of A is 0, the first optical payload unit multiframe indication indicates timeslots 1 to 119 in row 4 of the payload area of the data frame; when the value of A is 1, the first optical payload unit multiframe indication indicates timeslots 120 to 238 in row 4 of the payload area of the data frame.

18. The method according to any one of claims 10 to 17, wherein the data frame is an optical transport network OTN frame.

19. A data frame, comprising an overhead area and a payload area, wherein the overhead area comprises a first indication field and a second indication field, the first indication field indicates a status of a first timeslot in the payload area, and the second indication field indicates an association relationship between the first timeslot and service data.

20. The data frame according to claim 19, wherein the first indication field is located in row 4 and column 15 of the overhead area of the data frame, and the second indication field is located in row 4 and columns 15 and 16 of the overhead area of the data frame.

21. The data frame according to claim 18 or 19, wherein the first indication field is two bits, and the second indication field is 10 bits.

22. The data frame according to any one of claims 18 to 20, wherein the overhead area further comprises a first optical payload unit multiframe indication, a second optical payload unit multiframe indication, and a multiframe alignment signal, the first optical payload unit multiframe indication and the second optical payload unit multiframe indication are located in row 4 and column 16 of the overhead area of the data frame, the first optical payload unit multiframe indication is three bits, the second optical payload unit multiframe indication is five bits, and the multiframe alignment signal is three bits.

23. The data frame according to any one of claims 18 to 22, wherein the data frame is an optical transport network OTN frame.

24. A data transmission apparatus, comprising: a module configured to perform the method according to any one of claims 1 to 9, or a module configured to perform the method according to any one of claims 10 to 18.

25. A data transmission apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 9 or the method according to any one of claims 10 to 18.

FIG. 1

FIG. 2

| | 1 2 ... 15 16 | 17 18 ... 3824 |
|---|---|---|
| 1 | | |
| 2 | OTN overhead area | OTN payload area |
| 3 | | |
| 4 | | |

FIG. 3

OPU overhead area

OPU payload area

OTU/ODU overhead area

| | 14 | | 15 | | | | 16 | | | | 17 | | | | ... | | | | 3824 |
|---|---|---|---|---|---|---|---|---|---|---|---|---|---|---|---|---|---|---|---|

JC

RES | First indication field | Second indication field

FIG. 4

FIG. 5

| | 16B | 119 | 119 | 119 | 119 | 119 | 119 | 119 | 119 | : | 119 | 119 | 119 | 119 |
|---|---|---|---|---|---|---|---|---|---|---|---|---|---|---|
| 3824 | 16B | : | : | : | : | : | : | : | : | : | : | : | : | : |
| | 16B | 113 | 113 | 113 | 113 | 113 | 113 | 113 | 113 | : | 113 | 113 | 113 | 113 |
| | 16B | : | : | : | : | : | : | : | : | : | : | : | : | : |
| | 16B | 32 | 32 | 32 | 32 | 32 | 32 | 32 | 32 | : | 32 | 32 | 32 | 32 |
| | 16B | : | : | : | : | : | : | : | : | : | : | : | : | : |
| | 16B | 17 | 17 | 17 | 17 | 17 | 17 | 17 | 17 | : | 17 | 17 | 17 | 17 |
| | 16B | 16 | 16 | 16 | 16 | 16 | 16 | 16 | 16 | : | 16 | 16 | 16 | 16 |
| | 16B | : | : | : | : | : | : | : | : | : | : | : | : | : |
| | 16B | 1 | 1 | 1 | 1 | 1 | 1 | 1 | 1 | : | 1 | 1 | 1 | 1 |
| | 16B | 119 | 119 | 119 | 119 | 119 | 119 | 119 | 119 | : | 119 | 119 | 119 | 119 |
| | 16B | : | : | : | : | : | : | : | : | : | : | : | : | : |
| | 16B | 113 | 113 | 113 | 113 | 113 | 113 | 113 | 113 | : | 113 | 113 | 113 | 113 |
| | 16B | : | : | : | : | : | : | : | : | : | : | : | : | : |
| | 16B | 32 | 32 | 32 | 32 | 32 | 32 | 32 | 32 | : | 32 | 32 | 32 | 32 |
| | 16B | : | : | : | : | : | : | : | : | : | : | : | : | : |
| | 16B | 17 | 17 | 17 | 17 | 17 | 17 | 17 | 17 | : | 17 | 17 | 17 | 17 |
| | 16B | 16 | 16 | 16 | 16 | 16 | 16 | 16 | 16 | : | 16 | 16 | 16 | 16 |
| | 16B | : | : | : | : | : | : | : | : | : | : | : | : | : |
| 17 | 16B | 1 | 1 | 1 | 1 | 1 | 1 | 1 | 1 | : | 1 | 1 | 1 | 1 |

- 64 periods
- 32 periods
- OMFI=0

OPU0

| | | 8 | JC16 | JC16 | JC16 | | JC32 | JC32 | JC32 | | | | | CRC |
|---|---|---|---|---|---|---|---|---|---|---|---|---|---|---|
| | 16 | 7 | JC15 | JC15 | JC15 | | JC31 | JC31 | JC31 | | | | | |
| | | 6 | JC14 | JC14 | JC14 | OMFI-2 | JC30 | JC30 | JC30 | | | | | |
| | | 5 | JC13 | JC13 | JC13 | | JC29 | JC29 | JC29 | | RES | | | |
| | | 4 | JC12 | JC12 | JC12 | | JC28 | JC28 | JC28 | First indication field + second indication field | | | | |
| | | 3 | JC11 | JC11 | JC11 | | JC27 | JC27 | JC27 | | | | | |
| | | 2 | JC10 | JC10 | JC10 | OMFI-1=0 | JC26 | JC26 | JC26 | | | | | |
| | | 1 | JC9 | JC9 | JC9 | | JC25 | JC25 | JC25 | | | | | |
| | | 8 | JC8 | JC8 | JC8 | | JC24 | JC24 | JC24 | : | | | | |
| | 15 | 7 | JC7 | JC7 | JC7 | | JC23 | JC23 | JC23 | | JC119 | JC119 | JC119 | |
| | | 6 | JC6 | JC6 | JC6 | PT (MFAS=0)/ PT (MFAS!=0) | JC22 | JC22 | JC22 | | JC118 | JC118 | JC118 | |
| | | 5 | JC5 | JC5 | JC5 | | JC21 | JC21 | JC21 | | JC117 | JC117 | JC117 | |
| | | 4 | JC4 | JC4 | JC4 | | JC20 | JC20 | JC20 | | JC116 | JC116 | JC116 | |
| | | 3 | JC3 | JC3 | JC3 | | JC19 | JC19 | JC19 | | JC115 | JC115 | JC115 | |
| | | 2 | JC2 | JC2 | JC2 | | JC18 | JC18 | JC18 | | JC114 | JC114 | JC114 | |
| | | 1 | JC1 | JC1 | JC1 | | JC17 | JC17 | JC17 | | JC113 | JC113 | JC113 | |

MFAS 6 7 8 | 0 0 0 | 0 0 1 | . . . | 1 1 1

19

OPU0

| MFAS | 15 | | | | | | | | 16 | | | | | | | |
|---|---|---|---|---|---|---|---|---|---|---|---|---|---|---|---|---|
| 6 7 8 | 1 | 2 | 3 | 4 | 5 | 6 | 7 | 8 | 1 | 2 | 3 | 4 | 5 | 6 | 7 | 8 |
| 0 0 0 | PT (MFAS=0) | | | | | | | | OMFI-1=0 | | | OMFI-2=0 | | | | |
| 0 0 1 | RES | | | | CTRL | | | | TPID of TS #1 | | | | | | | |
| 0 1 0 | RES | | | | CTRL | | | | TPID of TS #2 | | | | | | | |
| 0 1 1 | RES | | | | CTRL | | | | TPID of TS #3 | | | | | | | |
| 1 0 0 | RES | | | | CTRL | | | | TPID of TS #4 | | | | | | | |
| 1 0 1 | RES | | | | CTRL | | | | TPID of TS #5 | | | | | | | |
| 1 1 0 | RES | | | | CTRL | | | | TPID of TS #6 | | | | | | | |
| 1 1 1 | CRC 16 | | | | | | | | | | | | | | | |
| 0 0 0 | RES (MFAS! =0) | | | | | | | | OMFI-1=0 | | | OMFI-2=1 | | | | |
| 0 0 1 | RES | | | | CTRL | | | | TPID of TS #7 | | | | | | | |
| 0 1 0 | RES | | | | CTRL | | | | TPID of TS #8 | | | | | | | |
| 0 1 1 | RES | | | | CTRL | | | | TPID of TS #9 | | | | | | | |
| 1 0 0 | RES | | | | CTRL | | | | TPID of TS #10 | | | | | | | |
| 1 0 1 | RES | | | | CTRL | | | | TPID of TS #11 | | | | | | | |
| 1 1 0 | RES | | | | CTRL | | | | TPID of TS #12 | | | | | | | |
| 1 1 1 | CRC 16 | | | | | | | | | | | | | | | |
| ... | ... | | | | | | | | | | | | | | | |
| 0 0 0 | RES (MFAS! =0) | | | | | | | | OMFI-1=0 | | | OMFI-2=19 | | | | |
| 0 0 1 | RES | | | | CTRL | | | | TPID of TS #115 | | | | | | | |
| 0 1 0 | RES | | | | CTRL | | | | TPID of TS #116 | | | | | | | |
| 0 1 1 | RES | | | | CTRL | | | | TPID of TS #117 | | | | | | | |
| 1 0 0 | RES | | | | CTRL | | | | TPID of TS #118 | | | | | | | |
| 1 0 1 | RES | | | | CTRL | | | | TPID of TS #119 | | | | | | | |
| 1 1 0 | RES | | | | CTRL | | | | RES | | | | | | | |
| 1 1 1 | CRC 16 | | | | | | | | | | | | | | | |

FIG. 6

OPUflex (2*OPU0)  OMFI=0  OMFI=1  64 periods

| MFAS | 15 | | | | | | | | 16 | | | | | | | | 7 | | | | | | | | | | | 3824 | | | | | | | | | |
|---|---|---|---|---|---|---|---|---|---|---|---|---|---|---|---|---|---|---|---|---|---|---|---|---|---|---|---|---|---|---|---|---|---|---|---|---|---|
| 6 7 8 | 1 | 2 | 3 | 4 | 5 | 6 | 7 | 8 | 1 | 2 | 3 | 4 | 5 | 6 | 7 | 8 | 16B | 16B | 16B | 16B | 16B | 16B | 16B | 16B | 16B | 16B | 16B | 16B | 16B | 16B | 16B | 16B | 16B | 16B | 16B | 16B |
| | JC1 | JC2 | JC3 | JC4 | JC5 | JC6 | JC7 | JC8 | JC9 | JC10 | JC11 | JC12 | JC13 | JC14 | JC15 | JC16 | 1 | ... | 16 | 17 | ... | 32 | ... | 113 | ... | 119 | 120 | ... | 135 | 136 | ... | 151 | ... | 232 | ... | 238 |
| 0 0 0 | JC1 | JC2 | JC3 | JC4 | JC5 | JC6 | JC7 | JC8 | JC9 | JC10 | JC11 | JC12 | JC13 | JC14 | JC15 | JC16 | 1 | ... | 16 | 17 | ... | 32 | ... | 113 | ... | 119 | 120 | ... | 135 | 136 | ... | 151 | ... | 232 | ... | 238 |
| | JC1 | JC2 | JC3 | JC4 | JC5 | JC6 | JC7 | JC8 | JC9 | JC10 | JC11 | JC12 | JC13 | JC14 | JC15 | JC16 | 1 | ... | 16 | 17 | ... | 32 | ... | 113 | ... | 119 | 120 | ... | 135 | 136 | ... | 151 | ... | 232 | ... | 238 |
| | PT (MFAS=0)/PT (MFAS!=0) | | | | | | | | OMFI-1=0 | | | | OMFI-2 | | | | 1 | ... | 16 | 17 | ... | 32 | ... | 113 | ... | 119 | 120 | ... | 135 | 136 | ... | 151 | ... | 232 | ... | 238 |
| | JC17 | JC18 | JC19 | JC20 | JC21 | JC22 | JC23 | JC24 | JC25 | JC26 | JC27 | JC28 | JC29 | JC30 | JC31 | JC32 | 1 | ... | 16 | 17 | ... | 32 | ... | 113 | ... | 119 | 120 | ... | 135 | 136 | ... | 151 | ... | 232 | ... | 238 |
| 0 0 1 | JC17 | JC18 | JC19 | JC20 | JC21 | JC22 | JC23 | JC24 | JC25 | JC26 | JC27 | JC28 | JC29 | JC30 | JC31 | JC32 | 1 | ... | 16 | 17 | ... | 32 | ... | 113 | ... | 119 | 120 | ... | 135 | 136 | ... | 151 | ... | 232 | ... | 238 |
| | JC17 | JC18 | JC19 | JC20 | JC21 | JC22 | JC23 | JC24 | JC25 | JC26 | JC27 | JC28 | JC29 | JC30 | JC31 | JC32 | 1 | ... | 16 | 17 | ... | 32 | ... | 113 | ... | 119 | 120 | ... | 135 | 136 | ... | 151 | ... | 232 | ... | 238 |
| | First indication field+second indication field | | | | | | | | | | | | | | | | 1 | ... | 16 | 17 | ... | 32 | ... | 113 | ... | 119 | 120 | ... | 135 | 136 | ... | 151 | ... | 232 | ... | 238 |
| | ... | | | | | | | | | | | | | | | | ... | ... | ... | ... | ... | ... | ... | ... | ... | ... | ... | ... | ... | ... | ... | ... | ... | ... | ... | ... |
| | JC113 | JC114 | JC115 | JC116 | JC117 | JC118 | JC119 | RES | | | | | | | | | 1 | ... | 16 | 17 | ... | 32 | ... | 113 | ... | 119 | 120 | ... | 135 | 136 | ... | 151 | ... | 232 | ... | 238 |
| | JC113 | JC114 | JC115 | JC116 | JC117 | JC118 | JC119 | RES | | | | | | | | | 1 | ... | 16 | 17 | ... | 32 | ... | 113 | ... | 119 | 120 | ... | 135 | 136 | ... | 151 | ... | 232 | ... | 238 |
| 1 1 1 | JC113 | JC114 | JC115 | JC116 | JC117 | JC118 | JC119 | RES | | | | | | | | | 1 | ... | 16 | 17 | ... | 32 | ... | 113 | ... | 119 | 120 | ... | 135 | 136 | ... | 151 | ... | 232 | ... | 238 |
| | CRC | | | | | | | | | | | | | | | | 1 | ... | 16 | 17 | ... | 32 | ... | 113 | ... | 119 | 120 | ... | 135 | 136 | ... | 151 | ... | 232 | ... | 238 |
| | JC120 | JC121 | JC122 | JC123 | JC124 | JC125 | JC126 | JC127 | JC128 | JC129 | JC130 | JC131 | JC132 | JC133 | JC134 | JC135 | 1 | ... | 16 | 17 | ... | 32 | ... | 113 | ... | 119 | 120 | ... | 135 | 136 | ... | 151 | ... | 232 | ... | 238 |
| 0 0 0 | JC120 | JC121 | JC122 | JC123 | JC124 | JC125 | JC126 | JC127 | JC128 | JC129 | JC130 | JC131 | JC132 | JC133 | JC134 | JC135 | 1 | ... | 16 | 17 | ... | 32 | ... | 113 | ... | 119 | 120 | ... | 135 | 136 | ... | 151 | ... | 232 | ... | 238 |
| | JC120 | JC121 | JC122 | JC123 | JC124 | JC125 | JC126 | JC127 | JC128 | JC129 | JC130 | JC131 | JC132 | JC133 | JC134 | JC135 | 1 | ... | 16 | 17 | ... | 32 | ... | 113 | ... | 119 | 120 | ... | 135 | 136 | ... | 151 | ... | 232 | ... | 238 |
| | PT (MFAS=0)/PT (MFAS!=0) | | | | | | | | OMFI-1=1 | | | | OMFI-2 | | | | 1 | ... | 16 | 17 | ... | 32 | ... | 113 | ... | 119 | 120 | ... | 135 | 136 | ... | 151 | ... | 232 | ... | 238 |
| | JC136 | JC137 | JC138 | JC139 | JC140 | JC141 | JC142 | JC143 | JC144 | JC145 | JC146 | JC147 | JC148 | JC149 | JC150 | JC151 | 1 | ... | 16 | 17 | ... | 32 | ... | 113 | ... | 119 | 120 | ... | 135 | 136 | ... | 151 | ... | 232 | ... | 238 |
| 0 0 1 | JC136 | JC137 | JC138 | JC139 | JC140 | JC141 | JC142 | JC143 | JC144 | JC145 | JC146 | JC147 | JC148 | JC149 | JC150 | JC151 | 1 | ... | 16 | 17 | ... | 32 | ... | 113 | ... | 119 | 120 | ... | 135 | 136 | ... | 151 | ... | 232 | ... | 238 |
| | JC136 | JC137 | JC138 | JC139 | JC140 | JC141 | JC142 | JC143 | JC144 | JC145 | JC146 | JC147 | JC148 | JC149 | JC150 | JC151 | 1 | ... | 16 | 17 | ... | 32 | ... | 113 | ... | 119 | 120 | ... | 135 | 136 | ... | 151 | ... | 232 | ... | 238 |
| | First indication field+second indication field | | | | | | | | | | | | | | | | 1 | ... | 16 | 17 | ... | 32 | ... | 113 | ... | 119 | 120 | ... | 135 | 136 | ... | 151 | ... | 232 | ... | 238 |
| | ... | | | | | | | | | | | | | | | | ... | ... | ... | ... | ... | ... | ... | ... | ... | ... | ... | ... | ... | ... | ... | ... | ... | ... | ... | ... |
| | JC232 | JC233 | JC234 | JC235 | JC236 | JC237 | JC238 | RES | | | | | | | | | 1 | ... | 16 | 17 | ... | 32 | ... | 113 | ... | 119 | 120 | ... | 135 | 136 | ... | 151 | ... | 232 | ... | 238 |
| | JC232 | JC233 | JC234 | JC235 | JC236 | JC237 | JC238 | RES | | | | | | | | | 1 | ... | 16 | 17 | ... | 32 | ... | 113 | ... | 119 | 120 | ... | 135 | 136 | ... | 151 | ... | 232 | ... | 238 |
| 1 1 1 | JC232 | JC233 | JC234 | JC235 | JC236 | JC237 | JC238 | RES | | | | | | | | | 1 | ... | 16 | 17 | ... | 32 | ... | 113 | ... | 119 | 120 | ... | 135 | 136 | ... | 151 | ... | 232 | ... | 238 |
| | CRC | | | | | | | | | | | | | | | | 1 | ... | 16 | 17 | ... | 32 | ... | 113 | ... | 119 | 120 | ... | 135 | 136 | ... | 151 | ... | 232 | ... | 238 |

FIG. 7

EP 4 593 311 A1

OPUflex (2*OPU0)

| MFAS | 15 | | | | | | | | 16 | | | | | | | |
|---|---|---|---|---|---|---|---|---|---|---|---|---|---|---|---|---|
| 678 | 1 | 2 | 3 | 4 | 5 | 6 | 7 | 8 | 1 | 2 | 3 | 4 | 5 | 6 | 7 | 8 |
| 0 0 0 | PT (MFAS=0) | | | | | | | | OMFI-1=0 | | | OMFI-2=0 | | | | |
| 0 0 1 | RES | | | CTRL | | | TPID of TS #1 | | | | | | | | | |
| 0 1 0 | RES | | | CTRL | | | TPID of TS #2 | | | | | | | | | |
| 0 1 1 | RES | | | CTRL | | | TPID of TS #3 | | | | | | | | | |
| 1 0 0 | RES | | | CTRL | | | TPID of TS #4 | | | | | | | | | |
| 1 0 1 | RES | | | CTRL | | | TPID of TS #5 | | | | | | | | | |
| 1 1 0 | RES | | | CTRL | | | TPID of TS #6 | | | | | | | | | |
| 1 1 1 | CRC 16 | | | | | | | | | | | | | | | |
| 0 0 0 | RES (MFAS!=0) | | | | | | | | OMFI-1=0 | | | OMFI-2=1 | | | | |
| 0 0 1 | RES | | | CTRL | | | TPID of TS #7 | | | | | | | | | |
| 0 1 0 | RES | | | CTRL | | | TPID of TS #8 | | | | | | | | | |
| 0 1 1 | RES | | | CTRL | | | TPID of TS #9 | | | | | | | | | |
| 1 0 0 | RES | | | CTRL | | | TPID of TS #10 | | | | | | | | | |
| 1 0 1 | RES | | | CTRL | | | TPID of TS #11 | | | | | | | | | |
| 1 1 0 | RES | | | CTRL | | | TPID of TS #12 | | | | | | | | | |
| 1 1 1 | CRC 16 | | | | | | | | | | | | | | | |
| ... | ... | | | | | | | | | | | | | | | |
| 0 0 0 | RES (MFAS!=0) | | | | | | | | OMFI-1=0 | | | OMFI-2=19 | | | | |
| 0 0 1 | RES | | | CTRL | | | TPID of TS #115 | | | | | | | | | |
| 0 1 0 | RES | | | CTRL | | | TPID of TS #116 | | | | | | | | | |
| 0 1 1 | RES | | | CTRL | | | TPID of TS #117 | | | | | | | | | |
| 1 0 0 | RES | | | CTRL | | | TPID of TS #118 | | | | | | | | | |
| 1 0 1 | RES | | | CTRL | | | TPID of TS #119 | | | | | | | | | |
| 1 1 0 | RES | | | CTRL | | | RES | | | | | | | | | |
| 1 1 1 | CRC 16 | | | | | | | | | | | | | | | |
| 0 0 0 | RES (MFAS!=0) | | | | | | | | OMFI-1=1 | | | OMFI-2=0 | | | | |
| 0 0 1 | RES | | | CTRL | | | TPID of TS #120 | | | | | | | | | |
| 0 1 0 | RES | | | CTRL | | | TPID of TS #121 | | | | | | | | | |
| 0 1 1 | RES | | | CTRL | | | TPID of TS #122 | | | | | | | | | |
| 1 0 0 | RES | | | CTRL | | | TPID of TS #123 | | | | | | | | | |
| 1 0 1 | RES | | | CTRL | | | TPID of TS #124 | | | | | | | | | |
| 1 1 0 | RES | | | CTRL | | | TPID of TS #125 | | | | | | | | | |
| 1 1 1 | CRC 16 | | | | | | | | | | | | | | | |
| 0 0 0 | PT (MFAS=0) | | | | | | | | OMFI-1=1 | | | OMFI-2=1 | | | | |
| 0 0 1 | RES | | | CTRL | | | TPID of TS #126 | | | | | | | | | |
| 0 1 0 | RES | | | CTRL | | | TPID of TS #127 | | | | | | | | | |
| 0 1 1 | RES | | | CTRL | | | TPID of TS #128 | | | | | | | | | |
| 1 0 0 | RES | | | CTRL | | | TPID of TS #129 | | | | | | | | | |
| 1 0 1 | RES | | | CTRL | | | TPID of TS #130 | | | | | | | | | |
| 1 1 0 | RES | | | CTRL | | | TPID of TS #131 | | | | | | | | | |
| 1 1 1 | CRC 16 | | | | | | | | | | | | | | | |
| ... | ... | | | | | | | | | | | | | | | |
| 0 0 0 | PT (MFAS=0) | | | | | | | | OMFI-1=1 | | | OMFI-2=19 | | | | |
| 0 0 1 | RES | | | CTRL | | | TPID of TS #234 | | | | | | | | | |
| 0 1 0 | RES | | | CTRL | | | TPID of TS #235 | | | | | | | | | |
| 0 1 1 | RES | | | CTRL | | | TPID of TS #236 | | | | | | | | | |
| 1 0 0 | RES | | | CTRL | | | TPID of TS #237 | | | | | | | | | |
| 1 0 1 | RES | | | CTRL | | | TPID of TS #238 | | | | | | | | | |
| 1 1 0 | RES | | | CTRL | | | RES | | | | | | | | | |
| 1 1 1 | CRC 16 | | | | | | | | | | | | | | | |

FIG. 8

900

| Transmitter device | | Receiver device |
|---|---|---|

S910: Obtain service data

S920: Map the service data to a data frame

S930: Send the data frame →

S940: Demap the service data from the data frame based on a first indication field and a second indication field

FIG. 9

Data transmission apparatus 1000

1001

1002

| Processor | | Transceiver |

1003

Memory

FIG. 10

## INTERNATIONAL SEARCH REPORT

| | International application No. |
|---|---|
| | **PCT/CN2023/131310** |

| A. | CLASSIFICATION OF SUBJECT MATTER |
|---|---|

H04J 3/16(2006.01)i

According to International Patent Classification (IPC) or to both national classification and IPC

| B. | FIELDS SEARCHED |
|---|---|

Minimum documentation searched (classification system followed by classification symbols)

IPC: H04J

Documentation searched other than minimum documentation to the extent that such documents are included in the fields searched

Electronic data base consulted during the international search (name of data base and, where practicable, search terms used)

CNTXT, WPABS, VEN, ENTXT, VCN, CNKI, CJFD: OSU, OTN, ODU, 帧, 业务, 开销区, 净荷区, 时隙, 指示, 表示, 字段, 比特, 复帧对齐, 支路端口标识, frame, overhead region, payload region, slot, indication, field, bit, PSI, MFAS, TPID

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020051851 A1 (HUAWEI TECHNOLOGIES CO., LTD.) 19 March 2020 (2020-03-19) description, pages 1 and 8-14, and figures 7-12 | 1-25 |
| X | WO 2018014342 A1 (HUAWEI TECHNOLOGIES CO., LTD.) 25 January 2018 (2018-01-25) description, pages 1 and 26-27, and figures 1 and 9-10 | 1-25 |
| A | CN 101155016 A (ZTE CORP.) 02 April 2008 (2008-04-02) entire document | 1-25 |
| A | CN 110557217 A (HUAWEI TECHNOLOGIES CO., LTD.) 10 December 2019 (2019-12-10) entire document | 1-25 |
| A | CN 1770673 A (HUAWEI TECHNOLOGIES CO., LTD.) 10 May 2006 (2006-05-10) entire document | 1-25 |
| A | US 2022337925 A1 (HUAWEI TECHNOLOGIES CO., LTD.) 20 October 2022 (2022-10-20) entire document | 1-25 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2024** | **30 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131310**

| Patent document cited in search report | | | Publication date (day/month/year) | Patent family member(s) | | | Publication date (day/month/year) |
|---|---|---|---|---|---|---|---|
| WO | 2020051851 | A1 | 19 March 2020 | CN | 111989933 | A | 24 November 2020 |
| WO | 2018014342 | A1 | 25 January 2018 | JP | 2019507562 | A | 14 March 2019 |
| | | | | JP | 6636653 | B2 | 29 January 2020 |
| | | | | EP | 3396879 | A1 | 31 October 2018 |
| | | | | EP | 3396879 | A4 | 06 March 2019 |
| | | | | EP | 3396879 | B1 | 16 December 2020 |
| | | | | US | 2018375604 | A1 | 27 December 2018 |
| | | | | US | 10608766 | B2 | 31 March 2020 |
| | | | | CN | 109478941 | A | 15 March 2019 |
| CN | 101155016 | A | 02 April 2008 | EP | 2209227 | A1 | 21 July 2010 |
| | | | | EP | 2209227 | A4 | 04 May 2016 |
| | | | | WO | 2009046596 | A1 | 16 April 2009 |
| | | | | BRPI | 0722157 | A2 | 18 March 2014 |
| | | | | US | 2010221005 | A1 | 02 September 2010 |
| | | | | CN | 100589365 | C | 10 February 2010 |
| CN | 110557217 | A | 10 December 2019 | WO | 2019228201 | A1 | 05 December 2019 |
| | | | | EP | 3796577 | A1 | 24 March 2021 |
| | | | | EP | 3796577 | A4 | 30 June 2021 |
| | | | | US | 2021084383 | A1 | 18 March 2021 |
| | | | | US | 11234055 | B2 | 25 January 2022 |
| CN | 1770673 | A | 10 May 2006 | CN | 1770673 | A | 10 May 2006 |
| US | 2022337925 | A1 | 20 October 2022 | WO | 2021139604 | A1 | 15 July 2021 |
| | | | | EP | 4075820 | A1 | 19 October 2022 |
| | | | | EP | 4075820 | A4 | 07 June 2023 |
| | | | | CN | 113099323 | A | 09 July 2021 |

Form PCT/ISA/210 (patent family annex) (July 2022)

**REFERENCES CITED IN THE DESCRIPTION**

**Patent documents cited in the description**

- CN 202211469527X